# DEMANDE DE BREVET EUROPEEN

(11) **EP 4 802 888 A1**
(43) Date de publication de la demande: **09.09.2026**
(21) Numéro de dépôt: 26162872.1
(22) Date de dépôt: 06.03.2026
(51) Int. Cl.: A01M 7/00

(54) **DESCENTE DE PULVÉRISATION POUR VIGNES**

(30) Priorité: 06.03.2025 FR 2502250
(71) Demandeur: Modul e Spray, 10340 Les Riceys (FR)
(72) Inventeur: LEFOL, Thomas, 33620 SAINT MARIENS (FR); GRADOS, Florent, 10340 LES RICEYS (FR)
(74) Mandataire: Lequien, Philippe

(57) **Abrégé**

L'invention concerne une descente (1) de pulvérisation, notamment pour vignes (11), la descente (1) de pulvérisation s'étendant le long d'un axe longitudinal (10) et comprenant un système de ventilation et un système d'approvisionnement d'un fluide à pulvériser, et au moins deux ensembles (2) comprenant chacun :
- un ventilateur à pâles, dit premier ventilateur (31), présentant un axe de ventilation (310) s'étendant transversalement à la axe longitudinal (10) ;
- une buse de pulvérisation (4) présentant un axe de pulvérisation (40) sécant avec l'axe de ventilation (310) du premier ventilateur (31) de l'ensemble (2) ; les premiers ventilateurs (31) présentant des axes de ventilation (310) parallèles et étant configurés pour produire des flux de ventilation dans un même sens.

## Description

### Domaine Technique

Le domaine de l'invention est celui de la conception et de la fabrication d'équipements de pulvérisation.

L'invention concerne plus particulièrement une descente de pulvérisation.

### État de la technique

Dans le domaine de la viticulture, on utilise au mieux des descentes de pulvérisation suspendues à un bras porté par un véhicule, tel qu'un tracteur, pour effectuer les opérations de pulvérisation.

Dans l'état de la technique, des descentes de pulvérisation sont alimentées en air par une turbine principale, elle-même fixée sur un tracteur viticole, et actionnée par le moteur du tracteur. Cette turbine génère un flux d'air sous pression qui est acheminé via des gaines pour alimenter chaque descente de pulvérisation. Ces descentes, disposées verticalement pour passer entre les rangs de vignes, sont équipées de buses de ventilation positionnées à proximité des buses de pulvérisation, permettant ainsi de distribuer un fluide sur les cultures.

Les buses de ventilation peuvent, par exemple, être constituées de fentes produisant une lame d'air à flux laminaire.

Ce type de descentes de pulvérisation présente plusieurs inconvénients.

Tout d'abord, il est fréquemment constaté que la distribution de l'air le long des descentes de pulvérisation manque d'homogénéité. Cette irrégularité se manifeste tant au sein d'une même descente que d'une descente à l'autre, ce qui entraîne une couverture inégale des vignes, compromettant ainsi l'efficacité des traitements.

Un autre problème majeur réside dans l'absence de possibilité de régler la vitesse de l'air soufflé.

De manière générale, les systèmes actuels ne permettent que deux modes de fonctionnement : un mode totalement actif et un mode désactivé. Il n'existe aucune possibilité de réglage intermédiaire pour ajuster finement la pulvérisation en fonction des besoins spécifiques des cultures. La seule option consiste à placer des bouchons sur certaines buses de ventilation ou de pulvérisation pour choisir les zones où l'air ou le fluide seront appliqués, mais cela reste une solution peu flexible et peu précise.

Cette approche présente un autre inconvénient majeur : elle entraîne une consommation énergétique considérable. La turbine et le système de distribution d'air sollicitent le moteur du tracteur, ce qui non seulement augmente la consommation de carburant, mais impose également des contraintes mécaniques sur le véhicule, rendant cette solution peu efficiente dans un contexte agricole où l'optimisation des ressources est cruciale.

En raison de ces différents aspects, les descentes de pulvérisation actuellement disponibles ne sont pas adaptées aux exigences modernes en termes d'efficacité énergétique et de performance agronomique. Une révision de ces dispositifs s'avère donc nécessaire pour répondre aux enjeux de durabilité et d'amélioration des pratiques viticoles.

### Problème technique

L'invention a notamment pour objectif de pallier ces inconvénients de l'art antérieur.

Plus précisément, l'invention a pour objectif de proposer une alternative aux descentes de pulvérisation classiques mettant en œuvre une turbine.

L'invention a également pour objectif de fournir une telle solution qui soit plus économique et plus performante en termes de distribution du fluide à pulvériser.

L'invention a encore pour objet de fournir une telle solution qui permette d'avoir une homogénéité de l'air soufflé sur les vignes qui soit importante.

### Résumé de l'invention

Ces objectifs, ainsi que d'autres qui apparaîtront par la suite, sont atteints grâce à l'invention qui a pour objet une descente de pulvérisation, notamment pour vignes, la descente de pulvérisation s'étendant en hauteur le long d'un axe longitudinal et comprenant un système de ventilation et un système d'approvisionnement d'un fluide à pulvériser, caractérisé en ce qu'elle comprend au moins deux ensembles, chaque ensemble étant formé par un module aboutable au module directement adjacent ou à chaque module directement adjacent, et comprenant chacun :
- un ventilateur à pâles, dit premier ventilateur, présentant un axe de ventilation s'étendant transversalement à la axe longitudinal ;
- une buse de pulvérisation présentant un axe de pulvérisation sécant avec l'axe de ventilation du premier ventilateur de l'ensemble ;
les premiers ventilateurs présentant des axes de ventilation parallèles et étant configurés pour produire des flux de ventilation dans un même sens.

La descente de pulvérisation selon l'invention évite d'avoir recours à une turbine par le biais de la génération d'un flux d'air directement au niveau de chaque ensemble à l'aide des ventilateurs à pâles.

Il a été constaté que la descente de pulvérisation selon l'art antérieur produit des flux d'air ayant tendance à plaquer les feuilles des vignes, et qui ne permet pas de produire une bonne répartition du fluide à pulvériser sur la vigne. Au contraire, l'usage de ventilateurs à pâles avec des buses de pulvérisation envoyant le fluide à pulvériser dans l'axe de ventilation, permet de créer un flux d'air rotationnel permettant entraînant le soulèvement (ballottement) des feuilles de la vigne favorisant l'application du produit à pulvériser sur les faces supérieures et inférieures des feuilles de vigne. De plus, l'usage de ventilateurs à pâles indépendants sur chaque ensemble permet, si besoin, de générer des flux d'air comparables le long de la descente de pulvérisation.

La descente de pulvérisation permet ainsi d'optimiser la pulvérisation et ainsi, si besoin, de limiter la quantité de fluide à pulvériser utilisée.

Grâce aux modules aboutables, la descente de pulvérisation présente une hauteur adaptée en fonction de l'usage nécessaire par le viticulteur et à ses vignes. La descente de pulvérisation peut présenter deux, trois, voire plus de modules aboutables en fonction de la hauteur de ces vignes.

Selon une conception préférée, chaque ensemble comprend :
- un autre ventilateur à pâles, dit second ventilateur, présentant un axe de ventilation distinct de l'axe de ventilation du premier ventilateur, et s'étendant parallèlement à l'axe de ventilation du premier ventilateur, le second ventilateur étant configuré pour produire un flux de ventilation dans un sens opposé à celui du premier ventilateur ;
- une autre buse de pulvérisation présentant un axe de pulvérisation sécant avec l'axe de ventilation du second ventilateur de l'ensemble.

Grâce à cette conception, la descente de pulvérisation permet de pulvériser les vignes de deux rangées de vignes entre lesquelles la descente de pulvérisation est située.

Selon une caractéristique préférée, les ventilateurs à pâles sont des ventilateurs électriques comprenant un moteur électrique individuel.

Il est ainsi particulièrement aisé de contrôler ces ventilateurs.

Préférentiellement, la descente de pulvérisation comprend une unité électronique configurée pour piloter individuellement chaque moteur électrique, la vitesse de rotation de chaque moteur électrique étant modulable.

Il est ainsi permis d'ajuster la vitesse de chaque moteur électrique des ventilateurs à pâles afin d'ajuster et d'optimiser la pulvérisation en fonction de ce qui est constaté sur les vignes.

Selon une conception avantageuse, la descente de pulvérisation comprend, pour chaque buse de pulvérisation, une électrovanne associée à ladite buse de pulvérisation pour alimenter ou non la buse de pulvérisation, et elle comprend une unité électronique configurée pour piloter individuellement chaque électrovanne.

Selon cette conception, il est permis d'empêcher la pulvérisation du fluide à pulvériser sur au moins l'une des buses de pulvérisation il est ainsi permis d'adapter en temps réel la manière dont la descente de pulvérisation produit une pulvérisation.

Selon une solution préférée, la descente de pulvérisation comprend un système de détection de végétaux couplé à l'unité électronique, l'unité électronique étant configurée pour piloter individuellement chaque électrovanne en fonction de données fournies par le système de détection de végétaux.

Grâce à un tel système de détection de végétaux il est permis de réaliser un pilotage précis et ajusté des électrovannes pour éviter d'envoyer du fluide à pulvériser sur des zones où il n'est pas nécessaire de réaliser une pulvérisation. Ceci permet également de faciliter le travail du viticulteur qui a alors simplement besoin de guider son engin entre les rangs de vignes.

L'invention a également pour objet un véhicule comprenant des moyens moteurs, caractérisé en ce qu'il porte au moins une descente de pulvérisation telle que décrite précédemment, et en ce qu'il comprend au moins un organe de fourniture d'électricité, distinct et indépendant des moyens moteurs du véhicule, l'organe de fourniture d'électricité étant configuré pour alimenter en électricité les ventilateurs à pâles de la ou des descentes de pulvérisation.

Cette conception du véhicule évite complétement la mobilisation de l'énergie des moyens moteur du véhicule pour pouvoir actionner les ventilateurs à pâles de la ou des descentes de pulvérisation.

### Brève description des dessins

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique vue de face d'une descente de pulvérisation selon l'invention ;
- la figure 2 est une représentation schématique partielle en perspective de dessus de l'extrémité supérieure d'une descente de pulvérisation ;
- la figure 3 est une représentation schématique vue de dessus d'un module d'une descente de pulvérisation selon l'invention ;
- la figure 4 est une représentation schématique illustrant le positionnement de deux descentes de pulvérisation selon l'invention entre trois rangées de vignes.

### Description détaillée

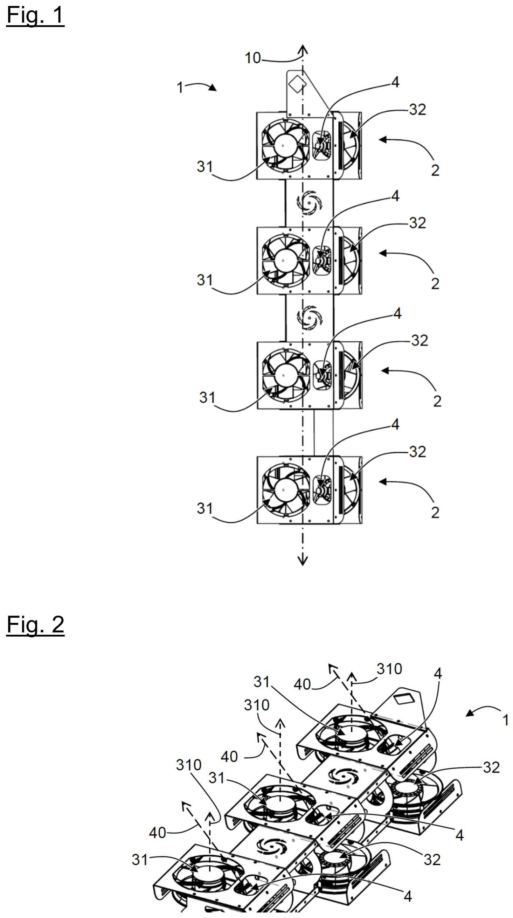

En référence aux figures 1 à 4, il est illustré des descentes 1 de pulvérisation.

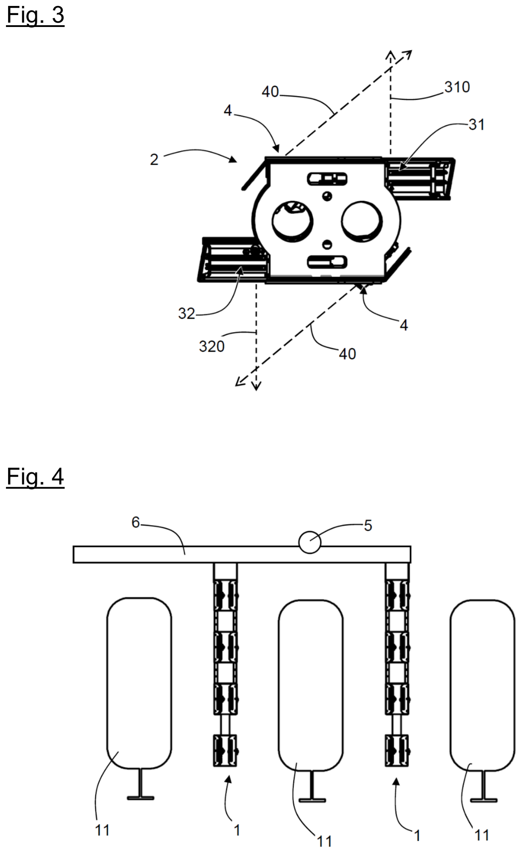

Tel que cela est représenté sur la figure 4, ces descentes 1 de pulvérisation sont conçues pour permettre la pulvérisation d'un fluide à pulvériser sur des vignes 11.

Ces vignes 11 s'étendent en rangées, sensiblement parallèles les unes par rapport aux autres, et les descentes 1 de pulvérisation sont destinées à s'étendre en hauteur entre deux rangées adjacentes de vignes 11.

Ces descentes 1 de pulvérisation sont destinées à être portées par un bras 6 afin que plusieurs rangées de vignes 11 soient simultanément traitées par une pluralité de descente 1 de pulvérisation.

Le bras 6 est quant à lui porté par un véhicule, tel qu'un tracteur ou une remorque.

La descente 1 de pulvérisation comprend un système de ventilation et un système d'approvisionnement d'un fluide à pulvériser.

Cette descente 1 de pulvérisation s'étend le long d'un axe longitudinal 10.

La descente de pulvérisation comprend une pluralité d'ensemble 2.

En référence à la figure 1, selon le présent mode de réalisation, la descente 1 de pulvérisation comprend quatre ensembles 2.

Néanmoins il est envisageable que la descente 1 de pulvérisation ne comprenne que deux ensembles 2, trois ensembles 2, ou tout autre nombre d'ensembles 2.

Chaque ensemble 2 comprend un ventilateur à pâles, nommé premier ventilateur 31.

Le premier ventilateur 31 présente un axe de ventilation 310 qui s'étend transversalement à l'axe longitudinal 10.

Chaque ensemble 2 comprend également une buse de pulvérisation 4 qui présente un axe de pulvérisation 40 qui est sécant avec l'axe de ventilation 310 du premier ventilateur 31 de l'ensemble 2. Cette buse de pulvérisation 4 est bien entendue orientée pour produire une pulvérisation dans le flux d'air issu du premier ventilateur 31.

Tel que cela est illustré sur la figure 1, ainsi que sur la figure 2, les axes de ventilation 310 des premiers ventilateurs 31 sont parallèles et sont configurés pour produire des flux de ventilation dans un même sens.

Selon le présent de réalisation, chaque ensemble 2 comprend également un autre ventilateur à pâles, nommé second ventilateur 32, ainsi qu'une autre buse de pulvérisation 4 associée de manière complémentaire au second ventilateur 32.

Tel que cela est visible sur les figures 1 à 3, et plus spécifiquement sur la figure 3, le second ventilateur 32 présente un axe de ventilation 320 qui distinct de l'axe de ventilation 310 du premier ventilateur 31. En d'autres termes, l'axe de ventilation 320 n'est pas confondu avec l'axe de ventilation 310 et ces deux axes de ventilation sont décalés l'un par rapport à l'autre. L'axe de ventilation 320 du second ventilateur 32 s'étend parallèlement à l'axe de ventilation 310 du premier ventilateur 31. Plus spécifiquement et tel que cela peut être observé sur la figure 3, le second ventilateur 32 est configuré pour produire un flux de ventilation dans un sens qui est opposé à celui du premier ventilateur 31.

L'autre buse de pulvérisation 4 présente un axe de pulvérisation 40 qui est séquent avec l'axe de ventilation 320 du second ventilateur 32 de l'ensemble 2, et cela de manière similaire à la buse de pulvérisation 4 associée au premier ventilateur 31. Cette buse de pulvérisation 4 est bien entendue orientée pour produire une pulvérisation dans le flux d'air issu du second ventilateur 32.

Il peut être observé une symétrie entre le second ventilateur 32 et l'autre buse de pulvérisation 4 et le premier ventilateur 31 et sa buse de pulvérisation 4 par rapport à un axe central de l'ensemble 2, tel que cela peut être observé sur la figure 3.

Tel qu'expliqué précédemment, cette configuration permet de créer un flux d'air rotationnel permettant de faire voltiger les feuilles de vignes lors de la pulvérisation afin que le fluide à pulvériser se retrouve sur les deux faces des feuilles de vignes.

En référence aux figures 1 et 2, chaque ensemble 2 est formé par un module. Ce module est aboutable aux modules formant les autres ensembles 2. Plus spécifiquement chaque module est aboutable au module qui est directement adjacent ou à chaque module qui est directement adjacent dans le cas où ledit module est encadré par deux autres modules.

Ceci permet d'ajuster le nombre de modules à la hauteur de la vigne qui doit être traitée par un viticulteur.

Chaque module comprend également un bâti positionnant le premier ventilateur 31 par rapport au second ventilateur 32. Ce bâti peut être sélectionné afin d'ajuster l'écartement des deux ventilateurs en fonction de l'écartement des rangs de vignes entre lesquels est destiné à circuler la descente.

Par exemple, le bâti sélectionné permet d'avoir un écartement de 40 cm entre la vigne et les ventilateurs, de chaque côté de la descente.

Les ventilateurs à pâles sont des ventilateurs électriques qui comprennent un moteur électrique individuel.

Selon le présent mode de réalisation, la descente 1 comprend une électrovanne associée à chaque buse de pulvérisation 4. L'actionnement d'une électrovanne permet ainsi d'alimenter ou non la buse de pulvérisation 4.

Les buses de pulvérisation 4 sont conçus pour générer et maintenir une pression constante de pulvérisation, et ce peu importe la vitesse et le débit de fluide à pulvériser en provenance du système d'approvisionnement d'un fluide à pulvériser. Ceci est par exemple obtenu grâce à une modulation du cycle d'ouverture des buses.

En référence à la figure 4, la descente 1 comprend une unité électronique 5.

Plus généralement, cette unité électronique 5 peut être configurée pour piloter une pluralité de descente 1 de pulvérisation.

Selon le présent mode de réalisation, l'unité électronique 5 est configurée pour piloter individuellement chaque moteur électrique des ventilateurs à pâles.

La vitesse de rotation de chaque moteur électrique est modulable. En conséquence, l'unité électronique 5 permet également d'influer sur la vitesse de rotation de chaque moteur électrique, et ce en temps réel si besoin.

Toujours selon le présent mode de réalisation, l'unité électronique 5 est également configurée pour piloter individuellement chaque électrovanne. L'unité électronique 5 permet ainsi empêcher la pulvérisation d'un fluide à pulvériser à un ou plusieurs niveaux (formés par les ensembles 2) le long de la descente 1 de pulvérisation.

Bien que cela ne soit pas représenté, selon le présent mode de réalisation, la descente 1 comprend un système de détection de végétaux qui est couplé à l'unité électronique 5.

L'unité électronique 5 est configurée pour piloter également individuellement chaque électrovanne en fonction de données fournies par le système de détection de végétaux.

Si le système de détection de végétaux permet de déterminer une absence d'une vigne (ou de végétaux de manière plus générale) en face d'un ventilateur à pâles d'un des ensemble 2, alors l'unité électronique 5 actionne l'électrovanne associée à la buse de pulvérisation 4 de l'ensemble 2 pour ferme l'électrovanne et empêcher la pulvérisation du fluide à pulvériser.

Ce système de détection de végétaux peut être formé par une caméra vidéo, et/ou par une caméra lidar, et/ou par des capteurs à ultrasons. D'autres systèmes électroniques sont envisageables pour participer à former ce système de détection de végétaux.

Ce système de détection de végétaux associé à l'unité électronique 5 permet d'automatiser et de contrôler le pilotage des buses de pulvérisation 4.

L'unité électronique 5 peut notamment être configurée pour déterminer la vitesse d'avancement de la ou des descentes 1 de pulvérisation afin de moduler la pulvérisation (par le biais du contrôle des ventilateurs et/ou des électrovannes). Cette vitesse d'avancement peut par exemple être obtenue par le biais d'un couplage de l'unité électronique 5 à un compteur de vitesse d'un véhicule portant la ou les descentes 1.

Bien que cela ne soit pas représenté, un véhicule peut être configuré pour porter au moins une descente 1 de pulvérisation 1 décrite précédemment.

Ce véhicule peut être formé par un tracteur agricole notamment, tel qu'expliqué précédemment.

Le véhicule comprend des moyens moteurs pouvant notamment être formés par un réservoir de carburant alimentant un moteur thermique, ou encore être formés par une batterie électrique alimentant un moteur électrique.

Le véhicule porte au moins une descente 1 de pulvérisation. Tel que cela est illustré sur la figure 4, ces descentes 1 de pulvérisation sont notamment portées par le biais d'un bras 6.

Selon une caractéristique avantageuse, le véhicule comprend au moins un organe de fourniture d'électricité, tel qu'une batterie électrique et/ou une génératrice électrique.

Cet organe de fourniture d'électricité est distinct et indépendant des moyens moteurs du véhicule.

Cet organe de fourniture d'électricité est configuré pour alimenter en électricité les ventilateurs à pâles des descentes 1 de pulvérisation.

Ceci permet d'éviter que l'énergie requise par les ventilateurs à pâles des descentes 1 de pulvérisation soit dérivée de l'énergie permettant d'actionner le véhicule, ou de réduire cette consommation d'énergie (dans le cas de l'implémentation d'une génératrice d'électricité).

L'organe de fourniture d'électricité peut également être configuré pour alimenter en électricité une pompe du système d'approvisionnement d'un fluide à pulvériser, ainsi que les électrovannes associées aux buses de pulvérisation 4.

L'unité électronique 5 précédemment évoquée peut être embarquée dans le véhicule.

Il est précisé que cette unité électronique 5 peut être formée par un unique système électronique ou une pluralité de systèmes électroniques interfacés ensemble.

La descente 1 précédemment décrite présente plusieurs avantages :
- elle permet d'obtenir une répartition précise, par exemple homogène, des flux d'air ventilés sur la hauteur de la végétation ainsi que sur chaque rang ;
- elle permet de réaliser un pilotage individuel des ventilateurs ;
- elle permet de ne pas envoyer de flux d'air et/ou de fluide à pulvériser sur les extérieurs (voisins par exemple) ;
- les buses peuvent avoir un début précis, constant et qui est régulé instantanément en fonction de la vitesse d'avancement du véhicule ;
- une modulation de la quantité de fluide à pulvériser peut être réalisée en fonction des végétaux rencontrés, et ce sans avoir à changer les buses ;
- une automatisation du contrôle et du pilotage des buses peut être mise en œuvre.

## Revendications

1. Descente (1) de pulvérisation, notamment pour vignes (11), la descente (1) de pulvérisation s'étendant en hauteur le long d'un axe longitudinal (10) et comprenant un système de ventilation et un système d'approvisionnement d'un fluide à pulvériser, **caractérisée en ce qu'**elle comprend au moins deux ensembles (2), chaque ensemble (2) étant formé par un module aboutable au module directement adjacent ou à chaque module directement adjacent, et comprenant chacun :
- un ventilateur à pâles, dit premier ventilateur (31), présentant un axe de ventilation (310) s'étendant transversalement à la axe longitudinal (10) ;
- une buse de pulvérisation (4) présentant un axe de pulvérisation (40) sécant avec l'axe de ventilation (310) du premier ventilateur (31) de l'ensemble (2) ;
les premiers ventilateurs (31) présentant des axes de ventilation (310) parallèles et étant configurés pour produire des flux de ventilation dans un même sens.

2. Descente (1) de pulvérisation selon la revendication précédente, **caractérisée en ce que** chaque ensemble (2) comprend :
- un autre ventilateur à pâles, dit second ventilateur (32), présentant un axe de ventilation (320) distinct de l'axe de ventilation (310) du premier ventilateur (31), et s'étendant parallèlement à l'axe de ventilation (310) du premier ventilateur (31), le second ventilateur (32) étant configuré pour produire un flux de ventilation dans un sens opposé à celui du premier ventilateur (31) ;
- une autre buse de pulvérisation (4) présentant un axe de pulvérisation (40) sécant avec l'axe de ventilation (320) du second ventilateur (32) de l'ensemble (2).

3. Descente (1) de pulvérisation selon l'une quelconque des revendications précédentes, **caractérisée en ce que** les ventilateurs à pâles sont des ventilateurs électriques comprenant un moteur électrique individuel.

4. Descente (1) de pulvérisation selon la revendication précédente, **caractérisée en ce qu'**elle comprend une unité électronique (5) configurée pour piloter individuellement chaque moteur électrique, la vitesse de rotation de chaque moteur électrique étant modulable.

5. Descente (1) de pulvérisation selon l'une quelconque des revendications précédentes, **caractérisée en ce qu'**elle comprend, pour chaque buse de pulvérisation (4), une électrovanne associée à ladite buse de pulvérisation pour alimenter ou non la buse de pulvérisation,
et **en ce qu'**elle comprend une unité électronique (5) configurée pour piloter individuellement chaque électrovanne.

6. Descente (1) de pulvérisation selon la revendication précédente, **caractérisée en ce qu'**elle comprend un système de détection de végétaux couplé à l'unité électronique (5), l'unité électronique (5) étant configurée pour piloter individuellement chaque électrovanne en fonction de données fournies par le système de détection de végétaux.

7. Véhicule comprenant des moyens moteurs, **caractérisée en ce qu'**il porte au moins une descente (1) de pulvérisation selon l'une quelconque des revendications précédentes, et **en ce qu'**il comprend au moins un organe de fourniture d'électricité distinct et indépendant des moyens moteurs du véhicule, l'organe de fourniture d'électricité étant configuré pour alimenter en électricité les ventilateurs à pâle de la ou des descentes (1) de pulvérisation.
